# EUROPÄISCHE PATENTANMELDUNG

(11) **EP 0 960 780 A2**
(43) Veröffentlichungstag der Anmeldung: **01.12.1999**
(21) Anmeldenummer: 99104689.7
(22) Anmeldetag: 10.03.1999
(51) Int. Cl.: B60R 9/055

(54) **Vorrichtung zur Aufnahme eines Koffers auf einer Fahrzeughaube eines Kraftfahrzeugs**

(30) Priorität: 27.05.1998 DE 19825401
(71) Anmelder: Dr.Ing. h.c.F. Porsche Aktiengesellschaft, 70435 Stuttgart (DE)
(72) Erfinder: Schmierer, Wolgang, 75173 Pforzheim (DE)

(57) **Zusammenfassung**

Eine Vorrichtung zur Aufnahme eines Koffers auf einer Fahrzeughaube, insbesondere auf einer Heckhaube eines Kraftfahrzeugs, umfaßt wenigstens drei auf einer Haubenfläche angeordnete Befestigungselemente, die über Befestigungsmittel mit Trägerteilen der Heckhaube verbunden sind. Zwei der Befestigungselemente sind in einer Querebene und - in bezug auf die Fahrtrichtung - nahe einer vorderen Haubenkante und ein weiteres Befestigungselement ist nahe einer hinteren Haubenkante in einer Längsmittenebene des Fahrzeugs angeordnet.

## Beschreibung

Die Erfindung bezieht sich auf eine Vorrichtung zur Aufnahme eines Koffers auf einer Fahrzeughaube eines Kraftfahrzeugs nach dem Oberbegriff des Anspruchs 1.

Aus der US-PS 3,565,305 ist eine Aufnahmevorrichtung für einen Koffer auf einer Heckhaube eines Kraftfahrzeugs bekannt. Der Koffer weist am Kofferboden Abstützelemente zur Haube hin auf, die mit einem Gurtband verbunden sind, welches die Heckhaube umspannt und hierdurch ein Festsetzen des Koffers an der Heckhaube bewirkt wird.

Die Aufgabe der Erfindung besteht darin, eine verbesserte Aufnahmevorrichtung für einen Koffer auf einer Heckhaube eines Kraftfahrzeuges zu schaffen, die eine einfache Handhabung zum Aufsetzen, Abnehmen und Festsetzen des Koffers gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß über drei Befestigungselemente in einfacher Handhabungsweise ein Koffer auf die Heckhaube eines Kraftfahrzeuges aufsetzbar, absetzbar und in eine Arretierstellung bringbar ist.

Die Befestigungselemente sind über Schrauben oder dergleichen Haltemittel mit der Heckhaube verbindbar, wobei für die - in bezug auf die Fahrtrichtung - vornliegenden Befestigungselemente mindestens jeweils eine Schraube oder dergleichen verwendet wird. Zur Abstützung gegenüber einem innenliegenden Haubenträger ist eine Trägerplatte vorgesehen, die Hülsen umfaßt, in denen die Schrauben angeordnet sind und somit eine Verspannung des Haubenträgers sowie der Haube unterbunden wird.

Diese Befestigungselemente sind derart ausgebildet, daß jeweils eine Arretierplatte am Kofferboden diese Elemente durch ein sogenanntes Hineinschieben untergreifen können. Hierzu ist der Kofferboden mit angeformten Einfädelkanälen versehen, die korrespondierend zu den Befestigungselementen angeordnet sind und bei einer Halteposition sich die Grundfläche der Befestigungselemente auf den Abstützflächen der Befestigungselemente anlegen.

Zum Untergreifen weisen die Befestigungselemente vorstehende Rastnasen und gegenüber der Abstützfläche wenigstens eine abgesetzte Seitenflanke auf. Es können auch nur die außenliegenden Seitenflanken der Befestigungselemente abgesetzt sein.

Das hintenliegende Befestigungselement ist als Bügel ausgebildet und wird nach dem Aufsetzen des Koffers von Schloßteilen unter- und übergriffen, so daß ein fester Halt gewährleistet ist.

Vorzugsweise sind die vornliegenden Befestigungselemente aus zwei Stütz- und Rastsegmenten bestehend und das hintenliegende Befestigungselement besteht aus einem Bügelsegment. Die Anordnung der Segmente kann erfahrungsgemäß auch so gestaltet sein, daß die beiden Befestigungselemente hintenliegend und das eine Bügelsegment vornliegend angeordnet ist.

Ein Ausführungsbeispiel der Erfindung ist in den Zeichnungen dargestellt und wird im nachfolgenden näher beschrieben.

Es zeigen
- Fig. 1: eine Draufsicht auf eine Heckhaube mit drei Befestigungselementen,
- Fig. 2: einen Längsschnitt durch ein vornliegendes Befestigungselement nach der Linie II-II der Fig. 1,
- Fig. 2a: einen Schnitt nach der Linie IIa-IIa der Fig. 1 durch das hintenliegende Befestigungselement,
- Fig. 3: eine Unteransicht eines Koffers mit Arretierplatte und Einfädelkanal,
- Fig. 4: einen Schnitt nach der Linie IV-IV der Fig. 3,
- Fig. 5: einen Längsschnitt durch das vornliegende Befestigungselement nach der Linie V-V der Fig. 1 und
- Fig. 6: einen Querschnitt nach der Linie VI-VI der Fig. 5 durch die Rastnase des Befestigungselements und die Arretierplatte des Koffers.

Die Aufnahmevorrichtung 1 für einen Koffer 7 auf einer Heckhaube 2 eines Kraftfahrzeuges erfolgt über eine Dreipunkt-Befestigung, welche - in bezug auf die Fahrtrichtung F - zwei vornliegende in einer Querebene Z-Z angeordnete Befestigungselemente 3, 4 nahe einer vorderen Haubenkante H und ein hintenliegendes Befestigungselement 5 nahe einer hinteren Haubenkante H1 und in einer Längsmittenebene L liegend, umfaßt. Die vornliegenden Befestigungselemente 3, 4 stehen mit korrespondierenden Arretierplatten 6, 6a eines Koffers 7 in Eingriff und das hintenliegende Befestigungselement 5 wird über ein am Koffer 7 befindliches Griffelement 8 mit Schloß, insbesondere mit einem Riegel 9 und einer Schloßauflage 10 in Eingriff gebracht und bildet eine Verriegelungs- und Festsetzeinrichtung.

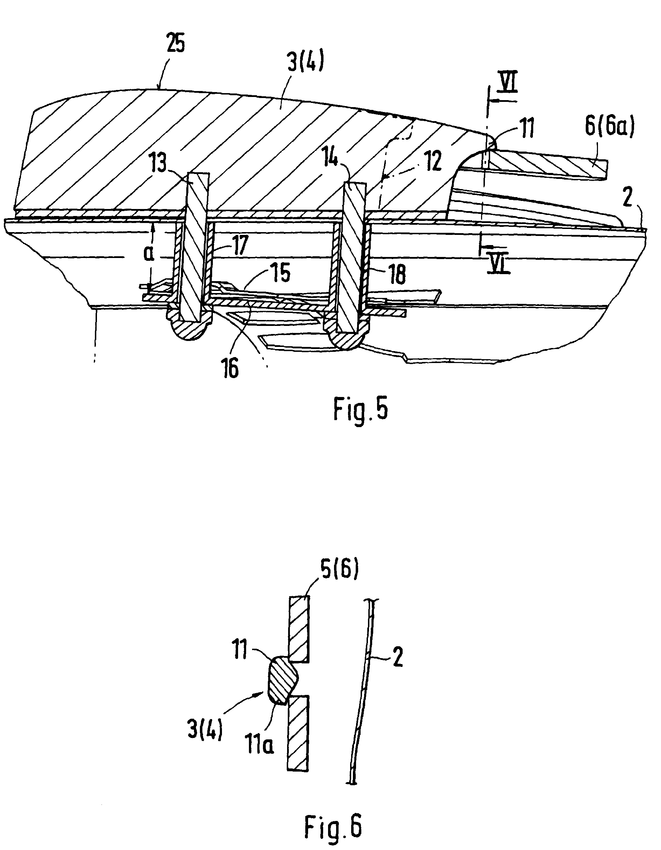

Die Befestigungselemente 3, 4 bestehen jeweils aus länglichen Segmenten mit einer vornliegenden Rastnase 11 (Fig. 5) und wenigstens einer seitlichen Absetzung 12 an mindestens einer Seitenflanke des Elements 3, 4.

Jedes Befestigungselement 3, 4 ist über Schrauben 13, 14 mit der Haube 2 verbunden, die sich an einem Haubenträger 15 abstützen. Hierzu sind die Schrauben 13, 14 in einer Trägerplatte 16 gehalten, an der Hülsen 17, 18 zur Aufnahme der Schrauben und zur Überbrückung eines Abstands a zwischen einem Haubenträger 15 und einem Trägerelement 16 angeformt sind, Gleichzeitig wird über die Abstandshülsen 17, 18 eine Verformung des Haubenträgers 15 sowie der Haube 2 beim Anziehen der Schrauben 13, 14 vermieden.

Zum Einhaken des Koffers 7 auf die Befestigungselemente 3, 4 sind am Kofferboden 7a die Arretierplatten 6, 6a vorgesehen. Diese weisen jeweils einen Schlitz 20 auf, der endseitig einen Einführkanal 21 im Kofferboden 7a besitzt, welcher in diesen eingeformt ist. Die Arretierplatte 6, 6a umgreift die Rastnase 11 und die Abstützfläche 25 des Befestigungselements 3, 4 beim Einhaken, wie Fig. 6 näher zeigt. Die Grundfläche G des Kanals 21 liegt auf der Abstützfläche 25 des Befestigungselements 3, 4 auf.

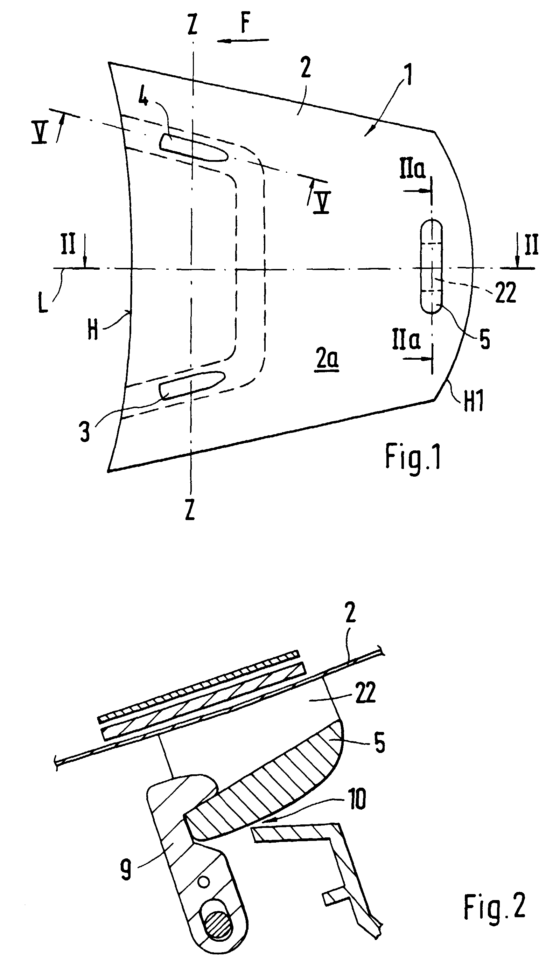

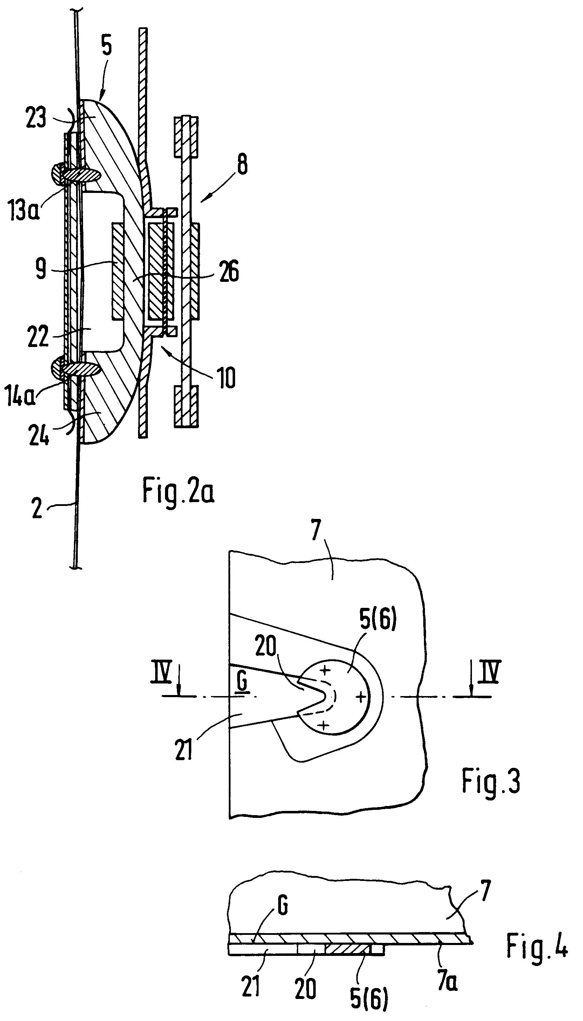

Das hintenliegende Befestigungselement 5 besteht im wesentlichen aus einem brückenförmig ausgebildeten Teil mit einer Öffnung 22 und seitlichen Lagerungsansätzen 23, 24 (Fig. 2a). Diese stützen sich auf der Haube 2 ab und sind über Schrauben 13a, 14a oder dergleichen mit der Haube 2 verbindbar.

Zur Festlegung und Arretierung des Koffers 7 dient der Riegel 9 des Kofferschlosses und die Schloßauflage 10. Von diesen beiden Schloßelementen 9 und 10 wird die Brücke 26 des Befestigungselements 5 von unten und oben fest umgriffen.

Das Aufsetzen des Koffers 7 erfolgt zuerst durch Einfädeln in die vornliegenden Befestigungselemente 3, 4 und einem anschließenden Aufsetzen auf das hintenliegende in der Fahrzeuglängsmittenachse L angeordnete weitere Befestigungselement 5. Durch Betätigung des Schloßmechanismusses 9, 10 wird eine Arretierung des Koffers 7 im Befestigungselement 5 bewirkt, so daß eine feste, lösbare Verbindung mit diesem Befestigungselement 5 gewährleistet ist.

## Patentansprüche

1. Vorrichtung zur Aufnahme eines Koffers auf einer Fahrzeughaube, insbesondere auf einer Heckhaube eines Kraftfahrzeugs, dadurch gekennzeichnet, daß die Vorrichtung (1) wenigstens drei auf einer Haubenfläche angeordnete Befestigungselemente (3, 4 und 5) umfaßt, die über Befestigungsmittel (13, 14 und 13a, 14a) mit Trägerteilen (15) der Heckhaube (2) verbunden sind, wobei zwei der Befestigungselemente (3, 4) in einer Querebene (Z-Z) und - in bezug auf die Fahrtrichtung (F) - nahe einer vorderen Haubenkante (H) und ein weiteres Befestigungselement (5) nahe einer hinteren Haubenkante (H1) in einer Längsmittenebene (L) des Fahrzeugs angeordnet ist.

2. Vorrichtung nach Anspruch 1, dadurch gekennzeichnet, daß die vornliegenden Befestigungselemente (3, 4) aus länglichen Segmenten mit einer Abstützfläche (25) und einer entgegen der Fahrtrichtung (F) weisenden Rastnase (11) ausgebildet sind und mindestens eine Seitenflanke des Elements gegenüber der Abstützfläche (25) eine Absetzung (12) aufweist.

3. Vorrichtung nach den Ansprüchen 1 oder 2, dadurch gekennzeichnet, daß die vornliegenden Befestigungselemente (3, 4) jeweils über zwei in einer Trägerplatte (16) angeordnete Schrauben (13, 14) an der Haube (2) befestigbar sind, wobei die Trägerplatte (16) zwei Abstandshülsen (17, 18) umfaßt, in denen die Schrauben (13, 14) angeordnet sind und die Abstandshülsen (17, 18) einen Abstand (a) von der Trägerplatte (16) bis zum Haubenblech (2) überbrücken.

4. Vorrichtung nach den Ansprüchen 1, 2 oder 3, dadurch gekennzeichnet, daß das Befestigungselement (3, 4) im Haltezustand des Koffers (7) auf der Heckhaube (2) mit einer am Kofferboden (7a) befestigten Arretierplatte (6, 6a) in Eingriff steht, welche die Rastnase (11) und mindestens einen seitlichen Bereich einer Absetzung (12) der Abstützfläche (25) untergreift.

5. Vorrichtung nach einem oder mehreren der vorhergehenden Ansprüche, dadurch gekennzeichnet, daß die Arretierplatte (6, 6a) endseitig eines Einführkanals (21) im Boden (7a) des Koffers (7) angeordnet ist und der Kanal (21) annähernd der länglichen Form des Befestigungselements (5, 6) entspricht und die Grundfläche (G) des Kanals (21) im Haltezustand auf der Abstützfläche (25) des Befestigungselements (3, 4) aufliegend ist.

6. Vorrichtung nach einem oder mehreren der vorhergehenden Ansprüche, dadurch gekennzeichnet, daß die jeweils außenliegenden Seitenflanken der Befestigungselemente (3, 4) gegenüber der Abstützfläche (25) zurückversetzt mit einer Absetzung (12) ausgebildet sind.

7. Vorrichtung nach einem oder mehreren der vorhergehenden Ansprüche, dadurch gekennzeichnet, daß das hintenliegende Befestigungselement (5) aus einem Bügel mit einer Brücke (26) besteht, die eine zur Haube (2) gerichtete Öffnung (22) aufweist, welche von einem Riegel (9) eines Kofferschlosses (8) von vorne - in bezug auf die Fahrtrichtung (F) gesehen - untergriffen und von oben über eine Schloßauflage (10) des Koffers (7) übergriffen wird.

8. Vorrichtung nach einem oder mehreren der vorhergehenden Ansprüche, dadurch gekennzeichnet, daß der Koffer (7) mittels der vornliegenden Befestigungselemente (3, 4) in Eingriff mit den Arretierplatten (6, 6a) am Kofferboden (7a) einhängbar und über das hintenliegende Befestigungselement (5) mittels des Kofferschlosses (8, 9, 10) festgesetzt und arretiert auf der Heckhaube (2) angeordnet ist.
